# FASCICULE DE BREVET EUROPEEN

(11) **EP 1 270 903 B1**
(45) Date de publication et mention de la délivrance du brevet: **17.05.2006**
(21) Numéro de dépôt: 02291410.5
(22) Date de dépôt: 07.06.2002
(51) Int. Cl.: F02C 7/262, F02C 3/113

(54) **Dispositif de secours au rallumage d'un turbo-réacteur en auto-rotation**
Sicherheitseinrichtung zum Starten eines Bläsertriebwerks in Autorotation
Safety device for restarting windmilling turbojet

(30) Priorité: 19.06.2001 FR 0108059
(43) Date de publication de la demande: 02.01.2003
(73) Titulaire: SNECMA, 75015 Paris (FR)
(72) Inventeur: Franchet, Michel, 77240 Pouilly -le-Fort (FR); Hebraud, Guy, 31820 Pibrac (FR)
(74) Mandataire: Boura, Olivier

(56) Documents cités:
- EP-A- 0 798 454
- GB-A- 971 690
- US-A- 4 062 185
- US-A- 4 062 186
- US-A- 5 103 631
- US-A- 5 349 814
- US-A- 5 694 765
- US-A- 5 845 483

## Description

### Arrière-plan de l'invention

La présente invention est relative à un dispositif de secours au rallumage d'un turboréacteur d'avion en auto-rotation, et plus précisément lorsque celui-ci subit une extinction en vol.

Historiquement, les avions de transport destinés aux vols longues distances étaient généralement équipés de quatre moteurs. Ces avions furent ensuite remplacés par des avions propulsés par seulement trois moteurs. Cette tendance à la réduction du nombre de moteurs sur ce type d'avion, associée à l'augmentation des capacités des avions afin de réduire leur coût d'exploitation, a abouti à la conception de biréacteurs de grande capacité dits « large twin ».

De leur coté, les moteurs qui équipent ce type d'avion ont évolué pour offrir de très fortes poussées avec de forts taux de dilution. L'augmentation du taux de compression et de l'inertie du compresseur haute-pression de ces moteurs a en outre entraîné, à condition donnée de vol, une diminution des régimes de rotation du compresseur en auto-rotation, ce qui a eu pour conséquence d'accroître les difficultés de rallumage de la chambre de combustion en cas d'extinction.

Par ailleurs, l'utilisation de biréacteurs pour des vols prolongés au-dessus des mers augmente la sévérité des conséquences d'une extinction d'un moteur en vol. De plus, pour des raisons diverses, un biréacteur peut être amené à subir également, fait rarissime mais possible, des extinctions multiples. En cas d'extinction en vol, volontaire ou involontaire, le moteur peut conserver la capacité de redémarrer. En cas d'extinction simple sur un multi-moteur, ce rallumage se fait par utilisation du démarreur, grâce à l'énergie fournie par le ou les moteurs ou bien par le groupe auxiliaire de puissance. Cependant, en cas d'extinctions multiples pour une cause de mode commun, le démarreur, sans énergie extérieure si le groupe auxiliaire de puissance est arrêté ou éteint, ne peut plus être utilisé et le moteur devra être rallumé en auto-rotation. Le groupe auxiliaire de puissance est un dispositif classiquement utilisé pour alimenter en électricité ou en air comprimé le démarreur du turboréacteur.

L'énergie disponible sur les batteries des biréacteurs étant limitée, les systèmes électriques de secours ne peuvent alors pas redémarrer le moteur. En effet, la puissance générée par la turbine à air de secours est faible (de l'ordre de 5 kW) et la pénalité de masse liée à cette turbine est très importante (environ 100 kg) et nécessite des contrôles réguliers.

La généralisation des vols bimoteurs de longue durée au-dessus des mers, associée à l'évolution prévisible des moteurs vers des taux de dilution et de compression encore plus élevés a donc eu pour conséquence d'accroître l'intérêt pour les dispositifs facilitant le rallumage des moteurs en vol en auto-rotation.

Dans le cas d'un turboréacteur à fort taux de dilution, lorsqu'il se produit une extinction en vol, l'alimentation des turbines en énergie thermique s'arrête, et la vitesse de rotation des rotors de compresseur et de soufflante diminue considérablement de façon correspondante. Cependant, le vent relatif (écoulement de l'air) qui traverse l'étage de la soufflante suffit à faire tourner celle-ci en moulinet, phénomène que l'on désigne habituellement par le terme « fonctionnement en auto-rotation ». Le compresseur haute-pression ne reçoit de son côté qu'une faible partie de ce vent relatif et n'atteint pas toujours un régime suffisant pour permettre un rallumage du moteur sans assistance extérieure. Le compresseur haute-pression entraîné en rotation par le vent relatif doit tourner assez rapidement (regime N2 voisin de 20%) pour délivrer une pression supérieure à la pression minimale d'inflammation, avant d'admettre le carburant et de l'enflammer.

La soufflante est une intéressante source d'énergie, accumulée d'une part en énergie cinétique due à son inertie, et d'autre part en énergie éolienne extraite de l'écoulement d'air qui la traverse. Le transfert d'une partie de cette énergie au corps haute pression est alors suffisante pour amener le compresseur haute-pression à un régime qui permet de rallumer le moteur. A toutes les vitesses de l'avion, on dispose donc d'une puissance pouvant être transmise du rotor basse-pression (soufflante) au rotor haute-pression (compresseur).

On notera que l'inertie et l'énergie de fonctionnement en moulinet de l'ensemble de l'étage basse-pression (soufflante et turbine basse-pression) sont toujours très supérieures à celles de l'étage haute-pression (compresseur et turbine haute-pression) et l'accroissement futur des taux de dilution va encore augmenter ce rapport.

Ainsi, on connaît par exemple des brevets US 5,845,483, FR 2 351 259 et FR 2 351 266 des générateurs d'énergie, hydraulique, électrique ou pneumatique entraînés par la soufflante afin de transmettre l'énergie accumulée par la soufflante au compresseur haute-pression par l'intermédiaire d'un dispositif approprié. Cependant, ces systèmes de rallumage présentent l'inconvénient majeur de nécessiter un montage compliqué et encombrant.

On connaît également du brevet US 5,349,814 un train d'engrenages munis d'embrayages à cliquets ou à cames reliant l'arbre de la turbine basse-pression à l'arbre de la turbine haute-pression pour transmettre le couple de la soufflante à des vitesses d'enclenchement et de déclenchement prédéterminées. Ce dispositif de rallumage est cependant peu fiable. En effet, il est très difficile à calibrer si bien qu'il risque de ne pas toujours se déclencher au bon moment.

On connaît du document US 5, 694, 765 une turbomachine comprenant deux corps tournant indépendamment l'un de l'autre. Selon cette publication, il est prévu un système de transmission pour transférer de la puissance entre ces deux corps.

### Objet et résumé de l'invention

La présente invention vise donc à pallier de tels inconvénients en proposant un dispositif de secours au rallumage d'un turboréacteur en auto-rotation qui est en permanence fonctionnel pour une utilisation simple, rapide et fiable.

A cet effet, il est prévu un dispositif de secours au rallumage d'un turboréacteur en auto-rotation tel que défini par le revendication 1.

Ainsi, le dispositif de secours au rallumage utilise l'énergie de la soufflante en auto-rotation pour la transmettre à l'arbre haute-pression afin d'amener celui-ci à un régime permettant le rallumage du turboréacteur. Le différentiel comporte une couronne dentée porte-satellites qui tourne autour des deux arbres et qui est couplée en rotation à une partie tournante du système de freinage. Celui-ci peut être formé par un frein, par exemple à disque(s) ou un ralentisseur, et être commandé par un dispositif hydraulique, pneumatique, électrique, électromagnétique ou combiné. Il est avantageusement commandé à partir d'un calculateur électronique permettant d'adapter le transfert d'énergie de l'arbre basse-pression vers l'arbre haute-pression en fonction du régime de rotation de ce dernier.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique et partielle d'un turboréacteur comportant le dispositif de rallumage selon un premier mode de réalisation de l'invention ;
- la figure 2 est une vue schématique du différentiel de la figure 1 dans une configuration à arbres corotatifs ;
- la figure 3 est vue en coupe selon III-III de la figure 2 ;
- la figure 4 est une vue schématique du différentiel de la figure 1 dans une configuration à arbres contrarotatifs ;
- la figure 5 est une vue schématique et partielle d'un turboréacteur comportant le dispositif de rallumage selon un deuxième mode de réalisation de l'invention.

### Description détaillée de modes de réalisation

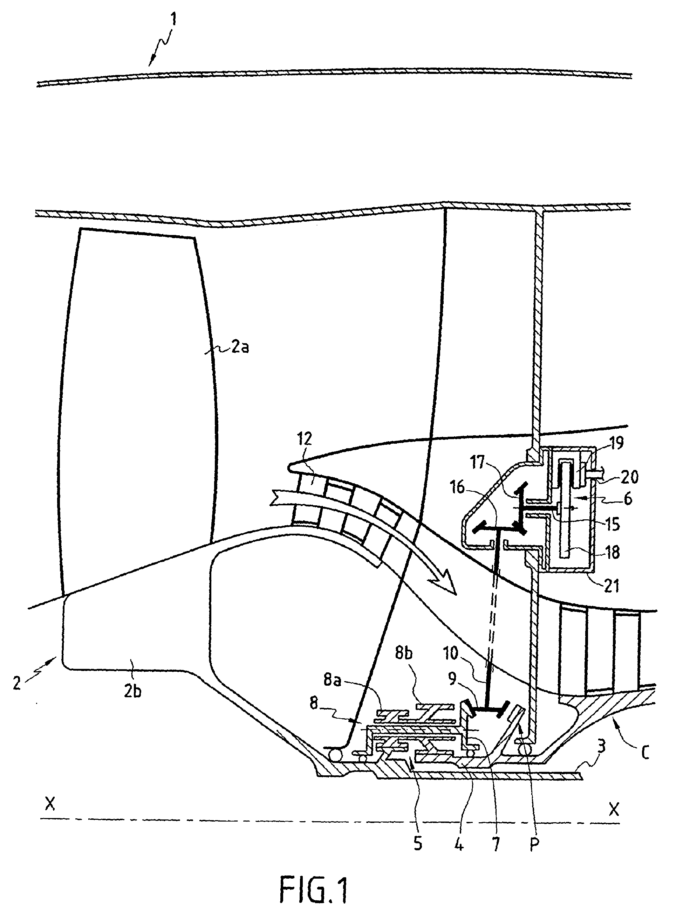

On se réfère d'abord à la figure 1 qui représente partiellement un turboréacteur 1 équipant par exemple des avions de transport longue distance du type biréacteur.

De façon connue en soi, le turboréacteur 1 d'axe longitudinal X-X comprend une soufflante 2 ayant une pluralité d'aubes 2a régulièrement réparties sur un disque 2b, et une turbine basse-pression (non représentée) qui entraîne en rotation la soufflante par l'intermédiaire d'un premier arbre 3 d'axe de rotation X-X couplé au disque 2b. Un compresseur haute-pression C est entraîné en rotation par une turbine haute-pression (non représentée) par l'intermédiaire d'un second arbre 4 qui est disposé coaxialement autour du premier arbre 3 et dont l'axe de rotation est également confondu avec l'axe longitudinal X-X du turboréacteur 1.

Pour la suite, on définit le corps haute-pression du turboréacteur comme étant l'ensemble comprenant le compresseur haute-pression, la turbine haute-pression et le second arbre 4 ou arbre haute-pression. De même, le corps basse-pression du turboréacteur regroupe la turbine basse-pression et le premier arbre 3 ou arbre basse-pression.

Typiquement, le turboréacteur 1 reçoit en vol de l'air ambiant à travers la soufflante, et une grande partie de cet air contribue à la poussée pour propulser l'avion en vol. La partie restante de cet air est acheminée jusqu'au compresseur haute-pression à travers un canal primaire 12. L'air comprimé qui en sort est alors dirigé vers une chambre de combustion (non représentée) dans laquelle il est mélangé avec un carburant et ensuite enflammé afin de produire les gaz de combustion qui entraînent les turbines haute et basse-pression avant d'être éjectés.

De manière à démarrer le turboréacteur au sol ou à redémarrer celui-ci en vol, un démarreur est classiquement prévu. Celui-ci reçoit de l'air comprimé ou de l'électricité provenant d'un groupe auxiliaire de puissance (non représenté) ou d'un autre moteur en fonctionnement et permet d'entraîner en rotation l'arbre haute-pression 4 par l'intermédiaire de moyens de transmission conventionnels (par exemple un pignon denté P) jusqu'au régime permettant le démarrage du turboréacteur.

De façon à assister ou à remplacer le démarreur en vol, le turboréacteur comporte un dispositif de secours au rallumage. Selon un premier mode de réalisation, celui-ci est composé d'un différentiel 5 et d'un système de freinage 6. Le différentiel 5 permet de relier les arbres basse et haute pression 3 et 4 entre eux et sert à compenser les différences de régime entre le corps haute-pression et le corps basse-pression lors du fonctionnement normal du turboréacteur.

En effet, il est connu que les corps basse et haute pression ont des régimes de rotation différents. Par exemple, pour un turboréacteur classique à haut taux de dilution, on a un régime de rotation N2 de l'ordre de 10000 à 12000 tours/minute pour le corps haute pression, et un régime N1 de l'ordre de 2000 à 3000 tours/minute pour le corps basse pression. Le rapport entre ces vitesses est donc compris, pour ces valeurs, entre 3 et 6 environ.

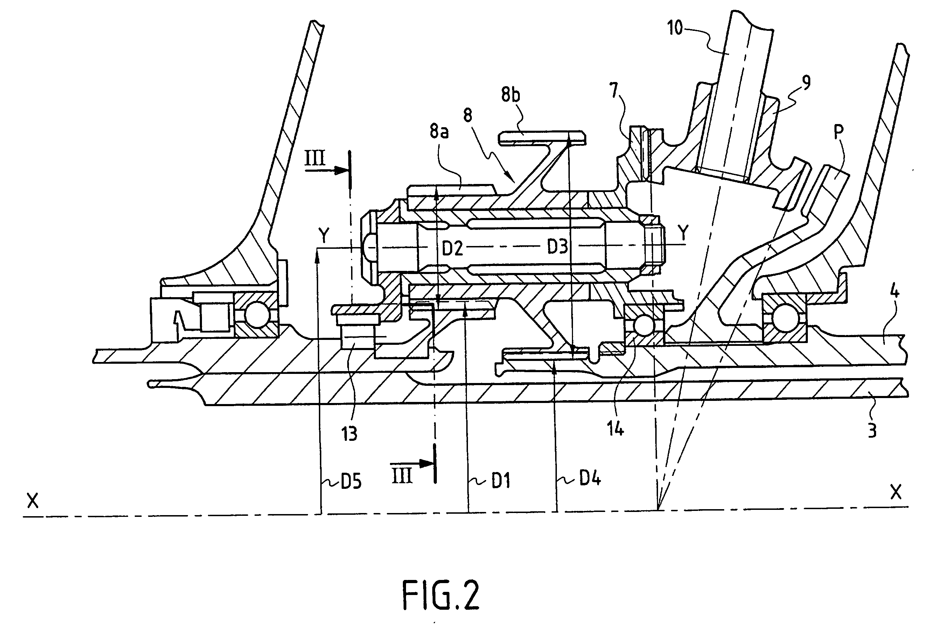

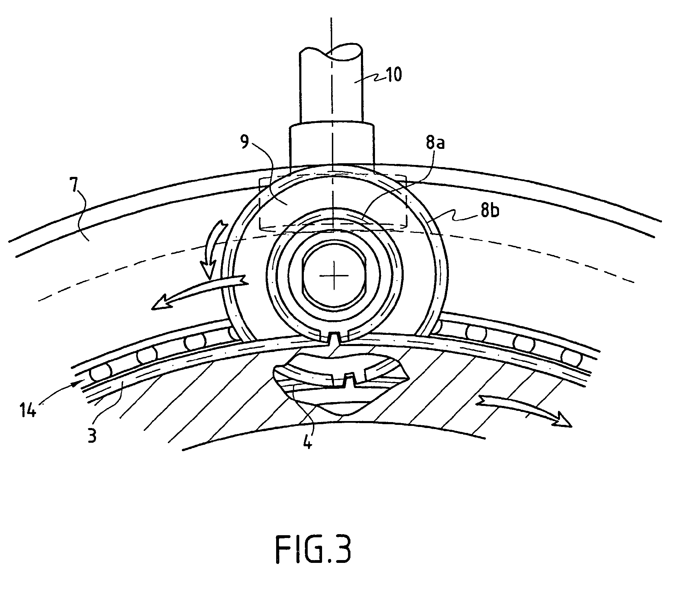

Afin de compenser ces différences de régime, le différentiel 5 selon ce premier mode de réalisation comporte essentiellement (cf. figures 2 et 3) :
- au moins une couronne dentée porte-satellites 7 qui tourne librement en fonctionnement normal du turboréacteur sur un palier 13 (par exemple à rouleaux) disposé sur l'arbre basse-pression 3 et sur un palier 14 (par exemple à billes) monté sur l'arbre haute-pression 4 ;
- au moins un pignon satellite 8 à deux rangées de dentures 8a et 8b de diamètres différents et de même axe de rotation Y-Y parallèle à X-X, qui est fixé à la couronne porte-satellites 7. Les dentures 8a et 8b engrènent respectivement sur l'arbre basse-pression 3 et l'arbre haute-pression 4.

En fonctionnement normal du turboréacteur, les dentures 8a et 8b du pignon satellite 8 orbitent et la couronne dentée porte-satellites 7 tourne librement autour des arbres 3 et 4.

Du fait de la différence de régimes entre les corps haute et basse-pression, le pignon satellite 8 qui tourne librement autour de son axe de rotation Y-Y, entraîne par cet axe la couronne dentée porte-satellites 7. La couronne dentée 7 qui porte le pignon satellite 8 est alors animée d'un mouvement de rotation libre autour de l'axe de rotation X-X, fonction de la différence de vitesses de rotation des arbres basse-pression 3 et haute-pression 4. Les dentures 8a et 8b du pignon satellite 8 orbitent autour de l'axe de rotation Y-Y ce qui compense la différence de vitesse de rotation entre l'arbre basse-pression 3 et l'arbre haute-pression 4.

Du fait de la présence des paliers 13 et 14 sur lesquels est montée la couronne dentée porte-satellites 7, cet ensemble tourne librement, c'est à dire en ne consommant qu'une très faible quantité de l'énergie cinétique provenant de la rotation des arbres 3 et 4.

Toujours selon ce premier mode de réalisation, la couronne dentée porte-satellites 7 entraîne en rotation un arbre tournant 15 du système de freinage 6 par l'intermédiaire d'un système de transmission composé d'un pignon d'angle 9, engrenant sur la couronne porte-satellites 7, d'un arbre de transmission 10 couplé au pignon 9 et d'un couple de pignons 16, 17 formant renvoi d'angle couplé à l'arbre 15.

Cette transmission de mouvement entre la couronne dentée porte-satellites 7 et le système de freinage 6 s'effectue également avec une très faible consommation d'énergie.

Dans l'exemple illustré, le système de freinage 6 comporte un disque de frein 18 solidaire en rotation de l'arbre 15. De façon bien connue, le freinage du disque 18 peut être obtenu au moyen de plaquettes de frein portées par un étrier 19 et appliquées sur les faces du disque 18 avec pression par un fluide hydraulique sous pression amené par une conduite 20. Le système de freinage est logé dans un boîtier 21.

D'autres types de systèmes de freinage connus peuvent être utilisés tels que des freins comprenant un ou plusieurs disques rotor intercalé(s) entre des disques stator et pouvant être serrés axialement les uns contre les autres ou encore des ralentisseurs.

Le système de freinage peut aussi être commandé par exemple par des dispositifs actionnés par des moyens électriques, électro-hydrauliques, pneumatiques, magnétiques, magnétostrictifs ou une combinaison de ces différents moyens. On notera qu'un frein à disque apparaît bien adapté en raison de sa légèreté, de sa fiabilité et de son faible encombrement.

On décrira maintenant le fonctionnement du dispositif de secours au rallumage qui vient d'être décrit.

Comme expliqué ci-dessus, le train épicycloïdal composé des éléments du différentiel 5, et des éléments de liaison mécanique avec le disque du système de freinage 6 tourne librement et compense les différences de régime entre les corps basse-pression et haute-pression en fonctionnement normal du turboréacteur. La couronne porte-satellites 7 tourne et les dentures 8a, 8b du pignon satellite 8 orbitent ainsi autour des premier et second arbres 3 et 4, tandis que le pignon d'angle 9, l'arbre 10, les pignons 16, 17 et l'arbre 15 avec le disque 18 tournent également librement.

En cas d'extinction accidentelle du turboréacteur, le régime du corps haute-pression chute fortement (dû au fort taux de compression) et le corps basse-pression entraîné par la soufflante tourne en moulinet. Le fonctionnement du système de freinage 6 est alors commandé de façon à ralentir la couronne dentée porte-satellites 7 par l'intermédiaire de l'arbre de transmission 10 en prise avec le pignon d'angle 9.

Le ralentissement de la couronne porte-satellites 7 provoque un couplage mécanique de l'arbre haute-pression 4 avec l'arbre basse-pression 3 grâce au pignon satellite 8. En exerçant une contrainte mécanique (freinage) sur la couronne porte-satellites 7, la rotation orbitale du pignon satellite 8 est ralentie et ne s'effectue alors plus librement comme lors du fonctionnement normal du turboréacteur. L'arbre basse-pression 3 entraîne alors progressivement l'arbre haute-pression 4 jusqu'à atteindre le régime N2 permettant le rallumage du turboréacteur.

On constate que l'énergie cinétique fournie par la soufflante au corps haute-pression est maximale lorsque le disque 18 du système de freinage 6 est dans une position totalement bloquée, immobilisant ainsi la couronne dentée porte-satellites 7. L'arbre basse-pression 3 entraîne alors directement l'arbre haute-pression 4 par l'intermédiaire des deux rangées de dentures 8a et 8b du pignon satellite 8. Sachant qu'une partie seulement de cette énergie disponible est nécessaire, le ralentissement peut conduire au rallumage du turboréacteur bien avant le blocage total du disque de frein.

De plus, en désignant par (cf. figure 2) :
- D1 : le diamètre du pignon de l'arbre basse-pression 3,
- D2 : le diamètre de denture 8a du pignon satellite 8 qui engrène sur l'arbre basse-pression 3,
- D3 : le diamètre de denture 8b du pignon satellite 8 qui engrène sur l'arbre haute-pression 4,
- D4 : le diamètre du pignon de l'arbre haute-pression 4,
- et D5 : la distance entre l'axe longitudinal X-X du turboréacteur 1 et l'axe Y-Y de rotation du pignon satellite 8,
le rapport de multiplication des pignons satellites (D1/D2 et D3/D4) est calculé de façon à ce que l'arbre basse-pression 3 entraîne l'arbre haute-pression 4 dans le rapport adéquat en fonction des régimes moteurs. Comme mentionné précédemment, ce rapport peut par exemple être compris entre 3 et 6, le différentiel agissant comme un multiplicateur entre l'arbre basse-pression 3 et l'arbre haute-pression 4.

Par ailleurs, ce rapport de multiplication est modifiable en augmentant ou en diminuant la distance D5 c'est à dire en éloignant ou en rapprochant l'axe Y-Y de rotation du pignon satellite 8 de l'axe X-X du turboréacteur 1.

Lorsque l'arbre haute-pression 4 a atteint un régime suffisamment élevé, du carburant mélangé à l'air comprimé est à nouveau introduit dans la chambre de combustion et il est ensuite enflammé afin de produire les gaz de combustion nécessaires à l'alimentation des turbines haute et basse pression.

Une fois le rallumage du turboréacteur ainsi effectué, le système de freinage 6 est alors désactivé pour permettre au pignon satellite 8 d'orbiter et à la couronne dentée porte-satellites 7 de tourner à nouveau librement pour compenser les écarts de régime entre les corps basse-pression et haute-pression.

A titre indicatif, le régime N2 permettant de rallumer le turboréacteur doit par exemple correspondre au minimum à une vitesse de l'ordre de 20% de la vitesse maximale de rotation de l'arbre haute-pression 4, et le régime N2 stabilisé en fin de démarrage être voisin de 55 à 65% de cette même vitesse.

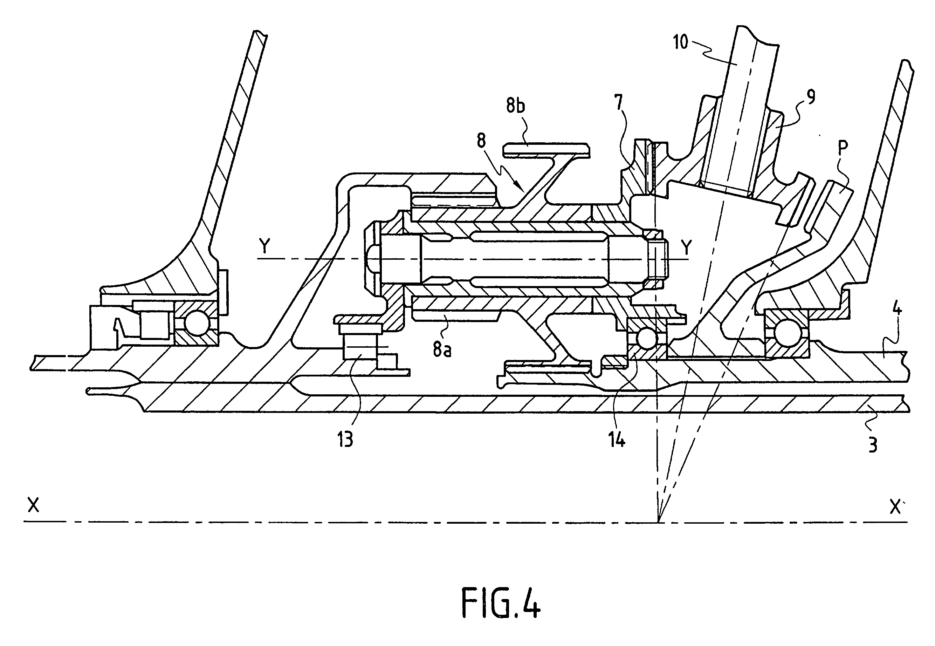

Selon une caractéristique avantageuse de l'invention, le dispositif de secours au rallumage peut être utilisé indifféremment dans une configuration à premier et second arbres corotatifs (cf. figures 2 et 3) ou bien dans une configuration à premier et second arbres contrarotatifs (cf. figure 4).

Comme on peut aisément le comprendre de la figure 4, les arbres 3 et 4 ont des sens de rotation inverses l'un par rapport à l'autre. Néanmoins, la couronne porte-satellites 7 et le pignon satellite 8 sont identiques à ceux du dispositif de secours au rallumage ayant des arbres corotatifs et présentent donc un fonctionnement similaire à celui-ci.

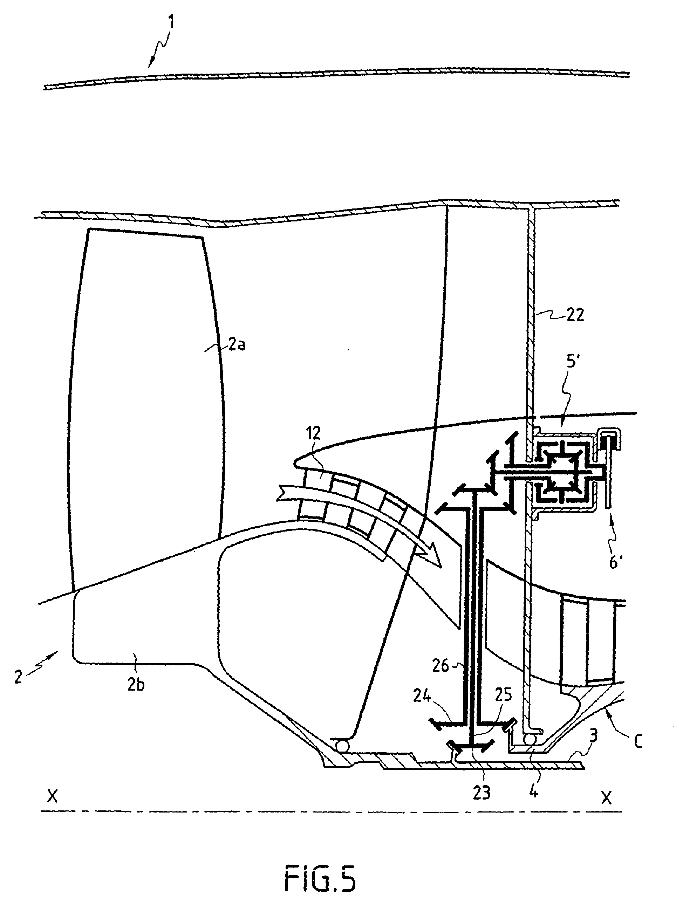

Selon un second mode de réalisation de l'invention représenté par la figure 5, le différentiel 5' du dispositif de secours au rallumage est disposé au niveau du système de freinage 6', à l'extérieur d'un carter intermédiaire 22. Cette configuration a pour avantage de faciliter la maintenance du dispositif de secours au rallumage (changement du différentiel par exemple) puisque celui-ci est ainsi aisément accessible.

Sur l'exemple représenté par la figure 5, on voit que le dispositif de secours au rallumage est notamment composé de deux pignons d'angle 23 et 24 qui engrènent respectivement sur les premier et second arbres 3 et 4 et qui sont reliés au différentiel 5' par l'intermédiaire respectivement de deux arbres d'entraînement 25 et 26 concentriques. Le différentiel 5' est un assemblage classique de pignons et ne sera donc pas détaillé. Les deux arbres d'entraînement ne sont pas nécessairement concentriques, ils peuvent être parallèles.

On remarquera également que le système de freinage 6' est identique à celui utilisé dans le premier mode de réalisation, c'est à dire avantageusement composé d'un frein à disque.

Bien entendu, le principe de fonctionnement de ce mode de réalisation du dispositif de secours au rallumage est identique à celui décrit précédemment, et à ce titre, il ne sera pas détaillé.

Selon une caractéristique avantageuse de l'invention, le dispositif de secours au rallumage comporte en outre un calculateur électronique pleine autorité (non représenté) communément dénommé FADEC (Full Authority Digital Engine Control) qui permet de commander le système de freinage 6 ou 6'. Grâce à un programme adapté, ce calculateur permet de calculer et de moduler l'effort de freinage nécessaire pour adapter le transfert d'énergie de la soufflante au corps haute-pression.

Cette caractéristique présente l'avantage de rendre le dispositif de secours au rallumage évolutif par rapport aux systèmes passifs connus. En effet, pour ajouter ou modifier une fonction (par exemple, le régime, l'altitude, la pression, la vitesse de l'avion ou le dosage de carburant) de ce calculateur électronique, il suffit d'en modifier le programme.

Par ailleurs, grâce un à tel calculateur, il n'est pas nécessaire d'attendre que les régimes d'auto-rotation de la soufflante et de la turbine haute-pression soient établis pour entamer une phase de rallumage. En effet, le dispositif de secours au rallumage peut être déclenché par l'intermédiaire du calculateur pendant une phase de décélération des régimes pour maintenir l'étage haute-pression au-dessus des régimes critiques et pour commander un rallumage, sachant que les moteurs à grand taux de dilution ne conservent pas la capacité de rallumage en auto-rotation dans tous les domaines de vol (celle-ci est conditionnée par la pression totale minimale en sortie de compresseur haute-pression qui dépend de l'altitude, de la pression, du régime N2 et de la vitesse de l'avion). En particulier, les tentatives à faible vitesse et basse altitude de l'avion peuvent échouer, la vitesse d'auto-rotation stabilisée devenant trop faible. Il est donc très important de ne pas différer la tentative de rallumage après une extinction multiple de manière à profiter d'un régime de rotation supérieur au régime d'auto-rotation stabilisé lorsque le moteur se trouve encore en phase de décélération.

La présente invention telle que décrite précédemment comporte de multiples avantages, et notamment elle permet de :
- profiter d'un vent relatif important avant le ralentissement de l'avion dû à la perte de poussée ;
- ne pas attendre d'atteindre une vitesse trop basse (qui entraînerait une importante chute d'altitude ou de portance) pour effectuer un rallumage. Si le régime haute-pression N2 est insuffisant pour assurer en moulinet le démarrage, l'avion devra alors descendre et/ou prendre de la vitesse pour porter le moteur dans la zone moulinet, le démarrage en vol étant d'autant plus aisé que l'altitude est faible et la vitesse de l'avion est grande.
- rendre le corps haute-pression autonome en rallumage, et entraîner ses accessoires (pompes à carburant, à huile, etc.) ;
- contrôler ou éviter le pompage du compresseur haute-pression en modulant la puissance transmise par la soufflante et éventuellement les géométries variables du compresseur (calage variable et vanne de décharge), ce en fonction du domaine de vol, de la vitesse et des régimes ;
- améliorer la souplesse de ce dispositif qui peut être mis au point par une simple évolution du programme du calculateur électronique et être optimisé point par point en essais. Grâce à ce calculateur, on peut adapter ce dispositif de rallumage à différents types de turboréacteur en changeant simplement le programme de ce calculateur.

Le dispositif de secours au rallumage selon l'invention permet également d'augmenter la sécurité par :
- l'amélioration du domaine de rallumage en vol aux faibles Mach et faibles altitudes, ce qui va dans le sens du durcissement des critères de certification ;
- la possibilité de tester le dispositif. En effet, il est aisé d'inclure après chaque vol dans des taches de maintenance automatique effectuées par le calculateur électronique au sol, un test de bon fonctionnement. Par exemple, en activant le procédé sur une ventilation sèche, on peut détecter, par la variation des régimes, le bon état du dispositif de secours au rallumage.
- la rapidité de mise en oeuvre du dispositif et de son procédé de fonctionnement. Il n'est en effet pas nécessaire d'attendre que les régimes d'auto-rotation de la soufflante et du compresseur haute-pression soient établis et stabilisés pour déclencher une phase de rallumage. Cette rapidité de mise en oeuvre permet en outre de profiter d'un moteur encore chaud qui n'a pas été trop ventilé, la température favorisant une meilleure pulvérisation du carburant.

Enfin, la chambre de combustion et les injecteurs de carburant peuvent être optimisés et dimensionnés en un point moins critique pour le rallumage en vol. En effet, de façon classique, la chambre de combustion est dimensionnée pour assurer un bon compromis entre le rallumage, la consommation spécifique de carburant et la pollution. Le dispositif selon la présente invention permet de s'affranchir de cet inconvénient. Par ailleurs, si ce dispositif de secours au rallumage est pris en compte dès la conception du turboréacteur, on enregistre des bénéfices supplémentaires, dont un gain en masse du turboréacteur obtenu par diminution de la longueur de la chambre de combustion et un gain éventuel sur le profil de température en sortie de chambre. Il en résulte des gains potentiels sur la durée de vie par l'abaissement des températures locales maximales, sur le rendement de la turbine haute-pression donc sur la consommation spécifique en carburant. Le compromis entre les exigences de rallumage et les limitations des émissions polluantes (NOx) devient plus aisé.

Il demeure bien entendu que la présente invention n'est pas limitée aux exemples de réalisation décrits ci-dessus mais qu'elle en englobe toutes les variantes.

## Revendications

1. Dispositif de secours au rallumage d'un turboréacteur en auto-rotation comportant une soufflante (2) entraînée par une turbine basse pression et un compresseur entraîné par une turbine haute pression, ledit dispositif comportant un premier arbre (3) pour l'entraînement de la soufflante (2) par la turbine basse pression, un second arbre (4) disposé coaxialement par rapport au premier pour l'entraînement du compresseur par la turbine haute pression et un différentiel (5, 5') reliant lesdits premier et second arbres en compensant leurs différences de vitesse de rotation lors du fonctionnement normal du turboréacteur, **caractérisé en ce qu'**il comporte en outre un système de freinage (6, 6') relié au différentiel afin de pouvoir ralentir ou bloquer celui-ci lorsque le turboréacteur s'éteint, de sorte que le premier arbre (3) entraîne alors le second arbre (4) pour que ce dernier atteigne un régime favorisant le rallumage du turboréacteur.

2. Dispositif selon la revendication 1, **caractérisé en ce que** le différentiel (5) comporte au moins une couronne dentée porte-satellites (7) qui tourne autour du premier et du second arbre (3, 4) et qui est couplé en rotation à une partie tournante du système de freinage (6).

3. Dispositif selon l'une des revendications 1 ou 2, **caractérisé en ce que** le différentiel (5) agit comme un multiplicateur entre le premier et le second arbre (3, 4) lorsqu'il est ralenti ou bloqué par le système de freinage (6).

4. Dispositif selon l'une quelconque des revendications précédentes, **caractérisé en ce que** le premier et le second arbre (3, 4) sont corotatifs.

5. Dispositif selon l'une quelconque des revendications 1 à 3, **caractérisé en ce que** le premier et le second arbre (3, 4) sont contrarotatifs.

6. Dispositif selon l'une quelconque des revendications précédentes, **caractérisé en ce que** le système de freinage (6) comporte au moins un frein à disque.

7. Dispositif selon l'une quelconque des revendications 1 à 5, **caractérisé en ce que** le système de freinage (6) comporte un ralentisseur.

8. Dispositif selon la revendication 1, **caractérisé en ce que** le différentiel (5') est disposé au niveau du système de freinage (6') à l'extérieur d'un carter intermédiaire (22).

9. Dispositif selon l'une quelconque des revendications précédentes, **caractérisé en ce qu'**il comporte en outre un calculateur électronique permettant de commander le système de freinage (6) et de calculer la pression de freinage nécessaire pour adapter le transfert d'énergie du premier arbre (3) vers le second arbre (4).

## Claims

1. An emergency device for relighting a windmilling turbojet, the jet comprising a fan (2) driven by a low-pressure turbine and a compressor driven by a high-pressure turbine, said device including a first shaft (3) for driving the fan (2) by the low-pressure turbine, a second shaft (4) disposed coaxially around the first shaft for driving the compressor by the high-pressure turbine and a differential (5, 5') interconnecting said first and second shafts while compensating for their different speeds of rotation in normal operation of the turbojet, said device being **characterised in that** it further comprises a braking system (6, 6') connected to the differential so as to enable it to be slowed down or blocked when the turbojet shuts down, thereby enabling the first shaft (3) to entrain the second shaft (4) so that it reaches a speed that favours relighting of the turbojet.

2. A device according to claim 1, **characterised in that** the differential (5) comprises at least one planet-carrying annular gear (7) rotating about the first and second shafts (3, 4) and coupled in rotation with a rotary portion of the braking system (6).

3. A device according to claim 1 or claim 2, **characterised in that** the differential (5) acts as a multiplier from the first shaft to the second shaft (3, 4) when it is slowed down or blocked by the braking system (6).

4. A device according to any one of the preceding claims, **characterised in that** the first and second shafts (3, 4) are co-rotating shafts.

5. A device according to any one of claims 1 to 3, **characterised in that** the first and second shafts (3, 4) are contra-rotating shafts.

6. A device according to any one of the preceding claims, **characterised in that** the braking system (6) includes at least one disk brake.

7. A device according to any one of claims 1 to 5, **characterised in that** the braking system (6) includes a retarder.

8. A device according to claim 1, **characterised in that** the differential (5') is placed together with the braking system (6') outside an intermediate casing (22).

9. A device according to any one of the preceding claims, **characterised in that** it further comprises an electronic computer enabling the braking system (6) to be controlled and calculating the braking pressure that is required to adapt the transfer of energy from the first shaft (3) to the second shaft (4).

## Patentansprüche

1. Notvorrichtung für das erneute Zünden eines Turbostrahltriebwerks in Autorotation, umfassend ein Gebläse (2), das über eine Niederdruckturbine angetrieben wird und einen Verdichter, der über eine Hochdruckturbine angetrieben wird, wobei die genannte Vorrichtung eine erste Welle (3) für den Antrieb des Gebläses (2) über die Niederdruckturbine, eine zu der ersten Welle koaxial angeordnete zweite Welle (4) für den Antrieb des Verdichters über die Hochdruckturbine sowie ein Ausgleichgetriebe (5, 5') umfaßt, das die erste und die zweite Welle unter Kompensierung ihrer Drehzahlunterschiede während des normalen Betriebs des Turbostrahltriebwerks verbindet, **dadurch gekennzeichnet, daß** sie ferner ein Bremssystem (6, 6') umfaßt, das mit dem Ausgleichgetriebe verbunden ist, um dieses dann verlangsamen oder blockieren zu können, wenn das Turbostrahltriebwerk ausgeht, so daß die erste Welle (3) dann die zweite Welle (4) antreibt, damit letztere eine Drehzahl erreicht, die das erneute Zünden des Turbostrahltriebwerks begünstigt.

2. Vorrichtung nach Anspruch 1, **dadurch gekennzeichnet, daß** das Ausgleichgetriebe (5) wenigstens einen Planetenräder tragenden Zahnkranz (7) umfaßt, der sich um die erste und um die zweite Welle (3, 4) dreht und der mit einem sich drehenden Teil des Bremssystems (6) drehgekoppelt ist.

3. Vorrichtung nach einem der Ansprüche 1 oder 2, **dadurch gekennzeichnet, daß** das Ausgleichgetriebe (5) wie ein Übersetzungsgetriebe zwischen der ersten und der zweiten Welle (3, 4) wirkt, wenn es durch das Bremssystem (6) verlangsamt oder blockiert wird.

4. Vorrichtung nach irgendeinem der vorhergehenden Ansprüche, **dadurch gekennzeichnet, daß** sich die erste und die zweite Welle (3, 4) gemeinsam drehen.

5. Vorrichtung nach irgendeinem der Ansprüche 1 bis 3, **dadurch gekennzeichnet, daß** sich die erste und die zweite Welle (3, 4) gegenläufig drehen.

6. Vorrichtung nach irgendeinem der vorhergehenden Ansprüche, **dadurch gekennzeichnet, daß** das Bremssystem (6) wenigstens eine Scheibenbremse umfaßt.

7. Vorrichtung nach irgendeinem der Ansprüche 1 bis 5, **dadurch gekennzeichnet, daß** das Bremssystem (6) einen Verlangsamer umfaßt.

8. Vorrichtung nach Anspruch 1, **dadurch gekennzeichnet, daß** das Ausgleichgetriebe (5') im Bereich des Bremssystems (6') außerhalb eines Zwischengehäuses (22) angeordnet ist.

9. Vorrichtung nach irgendeinem der vorhergehenden Ansprüche, **dadurch gekennzeichnet, daß** sie weiterhin einen elektronischen Rechner umfaßt, der ermöglicht, das Bremssystem (6) zu steuern und den Bremsdruck zu berechnen, der erforderlich ist, um die Energieübertragung von der ersten Welle (3) auf die zweite Welle (4) anzupassen.
